# EUROPEAN PATENT APPLICATION

(11) **EP 3 031 645 A1**
(43) Date of publication of application: **15.06.2016**
(21) Application number: 14465528.9
(22) Date of filing: 12.12.2014
(51) Int. Cl.: B60J 10/00

(54) **Seal and heating arrangement for a movable vehicle closure**

(71) Applicant: Continental Automotive GmbH, 30165 Hannover (DE)
(72) Inventor: Mircea, Teodor Emil, 700049 Iasi (RO)

(57) **Abstract**

The invention relates to a seal (1) for a movable vehicle closure (3), the seal (1) comprising: a body (5) having a contact section (7) configured for contacting the movable vehicle closure (3), and a heating device (9) configured for transferring heat to the periphery of the contact section (7) and to a heating arrangement (100) comprising such a seal (1).

## Description

This invention relates to a seal for a movable vehicle closure, a heating arrangement for a movable vehicle closure and a method for heating a movable vehicle closure.

Automotive vehicles are commonly used throughout the entire year and are therefore exposed to different environmental conditions. Furthermore, vehicles that are manufactured in large numbers, e.g. in series production, are used in regions with different climate conditions. By considering that the majority of vehicles is used at freezing temperatures during at least a limited time of the year, it has to be ensured that the functionality of all vehicle components is maintained at such conditions.

In particular the functionality of movable vehicle closures, such as retractable windows, sun roofs and convertible soft tops or hard tops, is often impaired at freezing temperatures, since frozen precipitation, such as frozen rain or rime, between seal and vehicle closure causes a blockage of the closure movability.

However, maintaining the movability of the vehicle closures is an important aspect of driving safety. The vehicle windows often have to be opened in order to re-establish visibility through a foggy vehicle window caused by an improper use of the vehicle's air conditioning system.

There are also other situations in which the movability of the vehicle closures is important, such as during a police control or while crossing a controlled national border. Also the payment of toll fees often requires the movability of the vehicle windows.

The known solution to melt the frozen precipitation and thereby to eliminate the blockage of the closure movability is to use the heating system for the vehicle's passenger compartment. However, re-establishing the movability of a vehicle closure by using the heating system for the vehicle's passenger compartment is inefficient and wastes fuel or electrical energy in case the vehicle has an electronic motor.

Therefore, the object of the invention is to provide a solution to guarantee the movability of vehicle closures under different environmental conditions, in particular for a quick and energy-efficient way for re-establishing the movability of vehicle closures caused by frozen precipitation.

The object is solved by means of a seal for a movable vehicle closure according to claim 1, by means of a heating arrangement for a movable vehicle closure according to claim 7, and by means of a method for heating a movable vehicle closure according to claim 11. Advantageous modifications and embodiments are subject-matter of the respective sub-claims.

The seal according to a first aspect of the invention comprises a body that has a contact section, wherein the contact section is configured for contacting the movable vehicle closure. The seal further comprises a heating device configured for transferring heat to the periphery of the contact section.

Due to the fact that the heating device is part of the seal, heat is generated close to the position where the frozen precipitation, which commonly is frozen water, has to be melted. As a result of generating the heat close to frozen precipitation causing the blockage of the closure movability, just a small proportion of the heat is lost during the heat transfer to the location, where the heat needed. This leads to a quick and energy-efficient way to re-establish the movability of vehicle closures caused by frozen precipitation.

In a first embodiment of the seal according to the invention, the heating device is at least partially embedded within the body of the seal. By at least partially embedding the heating device into the body of the seal, the heat required for melting the frozen water between the movable closure and the seal is generated even closer to the location, where the heat is needed.

In a preferred embodiment of the seal according to the invention, the heating device comprises at least one electrically heatable wire. The electrically heatable wire preferably is made from or comprises tungsten or a tungsten alloy. Alternatively or additionally, the electrically heatable wire is made from or comprises stainless steel or a stainless steel alloy. Electrically heatable wires are affordable heating elements and allow for an economic realization of the heating function. Also, such a wire can be embedded within the body of the seal during the manufacturing process without great effort.

In an advantageous embodiment of the seal according to the invention, the electrically heatable wire is embedded within the contact section of the body. Since the contact section is in direct contact with the movable vehicle closure, placing the electrically heatable wire in this section leads to an energy-efficient heating process and to a quick elimination of the blockage of the closure movability.

In one embodiment of the seal according to the invention, the electrically heatable wire comprises a plurality of wire segments being aligned substantially parallel to each other. By aligning a plurality of wire segments substantially parallel to each other the generated heat is distributed homogenously. In case the electrically heatable wire is embedded within the contact section of the body the homogenous distribution of the generated heat leads to most energy-efficient and quickest melting of the frozen water causing the blockage of the movability of the closure.

The electrically heatable wire is preferably arranged in a meandering pattern. By using a meandering pattern a homogenous distribution of the generated heat can be obtained by a single wire. Due to the meandering pattern the wire comprises one or more segments having a curvature of approximately 180 degrees. A meandering pattern leads to reduced costs and a simplified hardware configuration of the heating device.

A preferred embodiment of the seal according to the invention comprises a plurality of electrically heatable wires. A seal having a heating device with a plurality of electrically heatable wires has a reduced risk of function failure, since the heating device is still capable of generating sufficient heat to melt the frozen precipitation even if one of more, but not all, electrically heatable wires are broken or damaged, such that these wires do not function properly. Furthermore, the manufacturing process of the seal is simplified, since the wires can be integrated into existing seals by puncturing them from outside into the body.

Preferably two or more electrically heatable wires are aligned substantially parallel to each other. This, again, leads to a homogenous distribution of the generated heat.

In an advantageous embodiment of the seal according to the invention, the body comprises an elastically deformable section having a constantly curved cross-section, wherein the deformable section preferably comprises the contact section and the heating device. The elastically deformable section of the body or the entire body of the seal is preferably made from Acryl-Nitrile-Butadiene Rubber (NBR), Chloroprene Rubber (CR), Ethylene Propylene Rubber (EPM, EPDM), Fluorocarbon Rubber (FKM), Fluorosilicone Rubber (FVMQ), Hydrogenated Nitrile Butadiene Rubber (HNBR), Perfluorinated Rubber (FFKM), Polyurethane-Rubber (AU, EU), Silicone Rubber (LSR, Q, MQ, VMQ) or Styrol Butadiene Rubber (SBR).

The heating arrangement according to a second aspect of the invention comprises at least one seal according to the description above, and a controller for controlling the heating device of the seal. The controller allows for automatically and/or manually controlling the operation of the heating device of the seal.

In a first embodiment of the heating arrangement according to the invention, the controller is operatively coupled with a measuring device configured for identifying a blockage of the closure movability. The measuring device may be configured for measuring the current or the variation of the current over time of an actuator of the closure, such as a power window actuator of a vehicle window. The controller is preferably configured for identifying whether or not the movability of the closure is blocked by comparing measurement data with stored reference data. Further, the controller is preferably configured for activating the heating device upon exceedance of a current threshold value. The current threshold value refers to a current, which would not be present, if the movability of the closure is not blocked or impaired.

The controller is preferably configured for activating the heating device upon identification of a blockage of the movability of the closure. By activating the heating device the generation of heat is initiated. The generated heat is then transferred to the periphery of the body of the seal in order to melt the frozen water between the closure and a surrounding structure or the seal and thereby to eliminate the blockage of the movability.

In a preferred embodiment of the heating arrangement according to the invention, the controller is adapted for identifying a blockage caused by frozen precipitation between the movable closure and the seal or a structure surrounding the movable closure. The controller is able to distinguish between a blockage of movability caused by an obstacle, such as a human arm, within the path of movement of the closure and a blockage caused by frozen precipitation. This allows for activating the heating device only if the blockage is caused by frozen precipitation. If the blockage is caused by another reason, the heating device of the seal remains deactivated.

In an advantageous embodiment of the heating arrangement according to the invention, the controller is operatively coupled with a temperature sensor for measuring the ambient temperature. It is preferred that the controller is configured for activating the heating device if the measured temperature comes below a temperature threshold value. This allows for automatically activating and deactivating the heating device of the seal. The heating device may be activated, for instance, every time the ambient temperature drops below a value at which freezing of precipitation has to be expected. If the ambient temperature rises above a value at which freezing of precipitation is not possible, the heating device might be deactivated again.

In another embodiment of the heating arrangement according to the invention, the controller is operatively coupled with an indicator device for indicating a blockage of the movable closure. The indicator device preferably comprises one or more, most preferred two light-emitting diodes (LED). The light-emitting diodes preferably have different colors, such as red and green, wherein the red light-emitting diode is flashing when the controller identifies a blockage of the movability of the closure and wherein the green light is flashing when no blockage of the movability of the closure is identified. The indicator device may also be a display configured for providing a user with information relating to the blockage-status of the movable closure. Furthermore, the indicator device may also comprise a device for generating a sound signal, wherein the sound signal provides the user with information relating to the blockage-status of the movable closure.

In a preferred embodiment of the heating arrangement according to the invention, the controller is configured for adapting the active heating time dependent on the measured temperature. This allows for an energy-efficient operation of the heating device. Alternatively or additionally the controller is configured for adapting the heating intensity dependent on the measured temperature. The controller might be configured for eliminating the blockage caused by frozen precipitation in a specific period of time, such as 30 seconds. In order to realize such a control function the operation of the heating device must be adapted to the ambient temperature. If the ambient temperature is approximately zero degrees Celsius a less intensive heating is required as if the ambient temperature is below that temperature value.

In an advantageous embodiment of the heating arrangement according to the invention, the controller comprises a pulse width modulator. Pulse width modulation is an easy way to allow the controller to vary the heating intensity and thereby to adapt the generated heat to the ambient temperature.

In another embodiment of the heating arrangement according to the invention, the controller is configured for calculating the ambient temperature from the electrical resistance of the electrically heatable wire (s) . This avoids additional measuring devices capable of measuring the ambient temperature and simplifies the hardware and software of the controller.

The method for heating a movable vehicle closure according to a third aspect of the invention comprises the steps of providing a heatable seal for the movable vehicle closure, wherein the seal comprises a heating device, preferably a seal according to one of the claims 1 to 6, generating heat by means of the heating device, and transferring the heat to the periphery of the seal.

Regarding the advantages of the method for heating a movable vehicle closure it is referred to the advantages of the described seal for a movable vehicle and the advantages of the described heating arrangement for a movable vehicle closure.

In a first embodiment of the method for heating a movable vehicle closure according to the invention, the heat is generated within a body of the seal, wherein the heating device is preferably embedded within the body.

A preferred embodiment of the method for heating a movable vehicle closure according to the invention comprises the step of controlling the heating device by means of a controller for deicing frozen precipitation between the movable closure and the seal or a structure surrounding the movable closure.

In one embodiment of the method for heating a movable vehicle closure according to the invention, the step of controlling the heating device by means of a controller for deicing frozen precipitation between the movable closure and the seal or a structure surrounding the movable closure comprises at least one of the following steps: identifying a blockage of the movability of the movable closure and activating the heating device upon identification of the blockage of the movability of the movable closure; indicating the blockage of the movability of the movable closure by means of an indicator device; measuring the ambient temperature by means of a temperature sensor and activating the heating device if the measured temperature comes below a temperature threshold value; measuring the current of an actuator of the closure and activating the heating device upon exceedance of a current threshold value; activating the heating device for a predetermined heating time; and adapting the heating intensity of the heating device.

In another embodiment of the method for heating a movable vehicle closure according to the invention, the step of adapting the heating intensity of the heating device comprises the step of using pulse width modulation.

The object of the invention is also solved by means of a vehicle according to claim 15.

The vehicle according to the invention has a movable closure, wherein the vehicle comprises a seal according to one of the claims 1 to 6 and preferably a heating arrangement according to one of the claims 7 to 10 or wherein the vehicle is configured to carry out a method according to one of the claims 11 to 14.

The invention will be described below with reference to the accompanying drawings, wherein
- Fig. 1: is an illustration of a heating arrangement according to the invention in an inactive state;
- Fig. 2: is an illustration of the heating arrangement depicted in fig. 1 in an active state;
- Fig. 3: is an illustration of a seal according to the invention;
- Fig. 4: is another illustration of the seal depicted in fig. 3; and
- Fig. 5: is a cross-sectional view of another seal according to the invention.

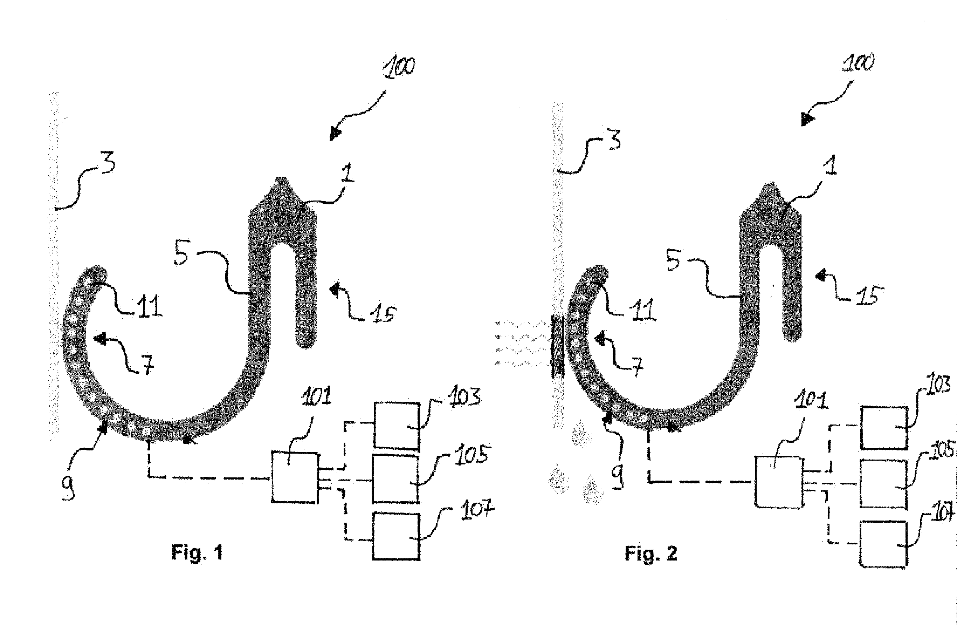

As illustrated in fig. 1, the heating arrangement 100 for a movable vehicle closure 3 comprises a seal 1, a controller 101, a measuring device 103, a temperature sensor 105 and an indicator device 107.

The seal 1 comprises a body 5 that has a contact section 7 contacting the movable vehicle closure 3 and a heating device 9 configured for transferring heat to the periphery of the contact section 7. The movable vehicle closure 3 is a retractable vehicle window. The heating device 9 comprises an electrically heatable wire 11, wherein the electrically heatable wire 11 is embedded within the contact section 7 of the body 5. The electrically heatable wire 11 further comprises a plurality of wire segments being aligned parallel to each other. Also, the electrically heatable wire 11 is arranged in a meandering pattern. The body 5 of the seal 1 comprises an elastically deformable section that has a constantly curved cross-section. The deformable section comprises the contact section 7 and the heating device 9. The seal 1 further comprises a mounting section 15 for mounting the seal 1 to a stationary structure, such as a window frame or another part of the vehicle body.

Frozen precipitation between the closure 3 and the seal 1 is causing a blockage of the movability of the closure 3.

The controller 101 is operatively coupled with the heating device 9 of the seal 1, preferably by means of an electrically conductive cable. Further, the controller 101 is configured for controlling the heating device 9 of the seal 1. The controller 101 is capable of activating and deactivating the heating device 9 of the seal 1 and of adapting the active heating time and the heating intensity of the heating device 9. The controller 101 also comprises a pulse width modulator for adapting the heating intensity of the heating device 9. Also, the controller 101 is configured for calculating the ambient temperature from the electrical resistance of the electrically heatable wire 11 of the heating device 9.

The measuring device 103 is operatively coupled with the controller 101, preferably by means of an electrically conductive cable. The measuring device 103 is configured for identifying a blockage of the movability of the closure 3 and for prompting the controller 101 to activate the heating device 9 of the seal 1 upon identification of a blockage of the movability of the movable closure 3. The measuring device 103 is configured for measuring the variation of the current over time of an actuator of the closure 3, such as a power window actuator of a vehicle window, in order to identify a blockage of the movability of the closure 3.

The temperature sensor 105 is also operatively coupled with the controller 101, preferably by means of an electrically conductive cable. The temperature sensor 105 is configured for measuring the ambient temperature and for prompting the controller 101 to activate the heating device 9 of the seal 1 if the measured temperature comes below a temperature threshold value. The temperature sensor 105 is configured for prompting the controller 101 to adapt the active heating time or the heating intensity of the heating device 9 dependent on the measured temperature. The indicator device 107 is also operatively coupled with the controller 101, preferably by means of an electrically conductive cable. The indicator device 107 is configured for indicating a blockage of the movable closure 3. The indicator device 107 preferably comprises two light-emitting diodes (LED) of different colors, namely red and green. The red light-emitting diode is flashing when the controller 101 identifies a blockage of the movability of the closure 3 and the green light is flashing when no blockage of the movability of the closure 3 is identified.

In fig. 2 the heating device 9 of the seal 1 is activated and generates heat. The generated heat is transferred to the periphery of the contact section 7 of the body 5 and thereby also to the frozen precipitation between the movable vehicle closure 3 and the seal 1 causing the blockage of the movability. Due to the fact that frozen precipitation is exposed to the generated heat, it starts to melt and maintains melting until the frozen precipitation is completely removed. As a result of the melting the movable closure 3 is released and the movability is re-established.

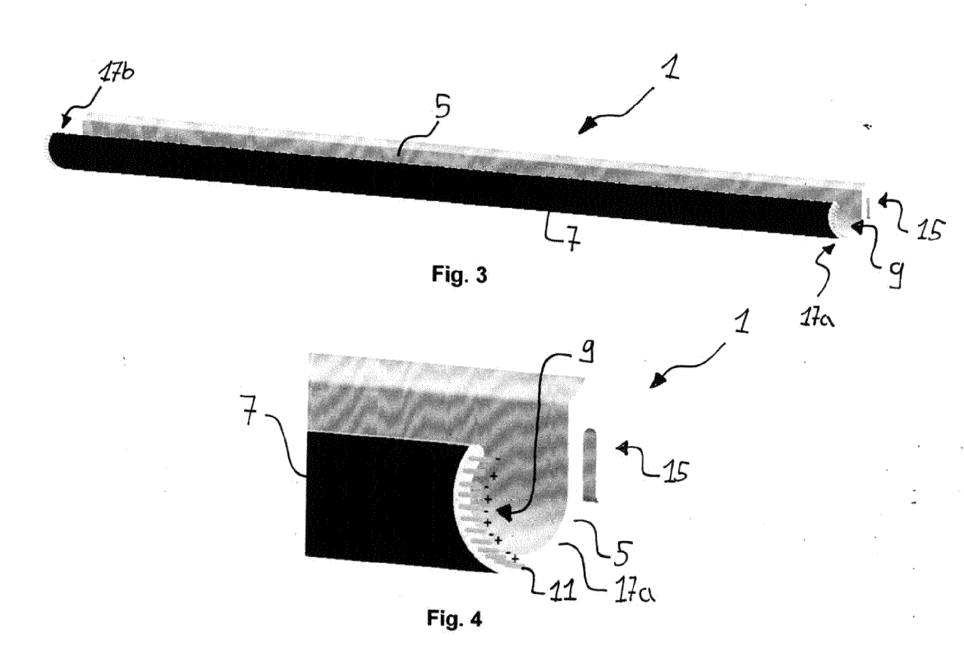

According to fig. 3 and fig. 4 the body 5 of the seal 1 has an elongated structure comprising a mounting section 15 for mounting the seal 1 to a stationary structure, such as a window frame, and a contact section 7 for contacting a movable vehicle closure. The heating device 9 of the seal 1 is partially embedded within the contact section 7 of the body 5. The heating device 9 comprises plurality of electrically heatable wires 11 being aligned substantially parallel to each other. The end section of each electrically heatable wire 11 projects laterally from first and second lateral faces 17a, 17b of the seal's body 5. Due to the projection the electrically heatable wires 11 can be coupled with a suitable coupling structure, such as a simple circuit board, at the first and second lateral faces 17a, 17b of the seal's body 5 in order to allow current to flow through the wires 11.

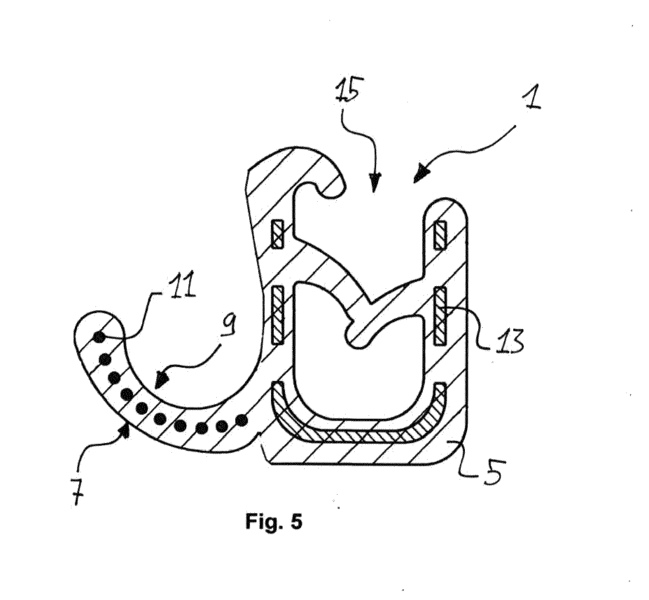

Fig. 5 illustrates a seal 1 having a modified mounting section 15 and a body 5 that comprises reinforcements 13. The reinforcements 13 are embedded in the body 5 of the seal 1 and increase the stiffness and rigidity of the mounting section 15. The reinforcements may be made from metal or a synthetic material, such as plastic. The mounting section 15 is adapted to an edge of a stationary structure, such as an edge surrounding a recess of a sun roof of a vehicle. However, the mounting section 15 of the body 5 can also have other shapes adapted to the intended purpose or to a specific part of the vehicle.

### List of Reference Signs

- 1: seal
- 3: movable vehicle closure
- 5: body
- 7: contact section
- 9: heating device
- 11: electrically heatable wire
- 13: reinforcement
- 15: mounting section
- 17a, 17b: lateral faces of the body

- 100: heating arrangement
- 101: controller
- 103: measuring device
- 105: temperature sensor
- 107: indicator device

## Claims

1. Seal (1) for a movable vehicle closure (3), the seal (1) comprising:
a body (5) having a contact section (7) configured for contacting the movable vehicle closure (3), and
a heating device (9) configured for transferring heat to the periphery of the contact section (7).

2. Seal (1) according to claim 1,
**characterized in that** the heating device (9) is at least partially embedded within the body (5).

3. Seal (1) according to claim 1 or 2,
**characterized in that** the heating device (9) comprises at least one electrically heatable wire (11).

4. Seal (1) according to claim 3,
**characterized in that** the electrically heatable wire (11) is embedded within the contact section (7) of the body (5).

5. Seal (1) according to claim 3 or 4,
**characterized in that** the electrically heatable wire (11) comprises a plurality of wire segments being aligned substantially parallel to each other, wherein the electrically heatable wire (11) is preferably arranged in a meandering pattern.

6. Seal (1) according to one of the claims 3 to 5,
**characterized by** a plurality of electrically heatable wires (11), wherein two or more electrically heatable wires (11) are aligned substantially parallel to each other.

7. Heating arrangement (100) for a movable vehicle closure (3), the heating arrangement (100) comprising:
at least one seal (1) according to one of the preceding claims, and
a controller (101) for controlling the heating device (9) of the seal (1).

8. Heating arrangement (100) according to claim 7,
**characterized in that** the controller (101) is operatively coupled with a measuring device (103) configured for identifying a blockage of the closure movability, wherein the controller (101) is configured for activating the heating device (9) upon identification of a blockage of the movability of the movable closure (3).

9. Heating arrangement (100) according to claim 7 or 8,
**characterized in that** the controller (101) is operatively coupled with a temperature sensor (105) for measuring the ambient temperature, wherein the controller (101) is configured for activating the heating device (9) if the measured temperature comes below a temperature threshold value.

10. Heating arrangement (100) according claim 9, **characterized in that** the controller (101) is configured for adapting the active heating time and/or the heating intensity dependent on the measured temperature.

11. Method for heating a movable vehicle closure (3), comprising the steps:
providing a heatable seal (1) for the movable vehicle closure (3), wherein the seal (1) comprises a heating device (9), preferably a seal (1) according to one of the claims 1 to 6;
generating heat by means of the heating device (9); and
transferring the heat to the periphery of the seal (1).

12. Method according to claim 11,
**characterized in that** the heat is generated within a body (5) of the seal (1), wherein the heating device (9) is preferably embedded within the body (5).

13. Method according to claim 11 or 12,
comprising the step of controlling the heating device (9) by means of a controller (101) for deicing frozen precipitation between the movable closure (3) and the seal (1) or a structure surrounding the movable closure (3).

14. Method according to claim 13,
wherein the step of controlling the heating device (9) by means of a controller (101) for deicing frozen precipitation between the movable closure (3) and the seal (1) or a structure surrounding the movable closure (3) comprises at least one of the following steps:
identifying a blockage of the movability of the movable closure (3) and activating the heating device (9) upon identification of a blockage of the movability of the movable closure (3) ;
indicating the blockage of the movability of the movable closure (3) by means of an indicator device;
measuring the ambient temperature by means of a temperature sensor (105) and activating the heating device (9) if the measured temperature comes below a temperature threshold value;
measuring the current of an actuator of the closure (3) and activating the heating device (9) upon exceedance of a current threshold value;
activating the heating device (9) for a predetermined heating time; and
adapting the heating intensity of the heating device (9).

15. Vehicle having a movable closure (3), wherein the vehicle comprises a seal (1) according to one of the claims 1 to 6 and preferably a heating arrangement (100) according to one of the claims 7 to 10 or wherein the vehicle is configured to carry out a method according to one of the claims 11 to 14.
